# EUROPEAN PATENT APPLICATION

(11) **EP 4 843 371 A1**
(43) Date of publication of application: **25.11.2026**
(21) Application number: 25177709.0
(22) Date of filing: 20.05.2025
(51) Int. Cl.: A01C 1/06

(54) **IMPROVEMENTS IN AND RELATING TO SEED CLUSTERS**

(71) Applicant: Agric SeedCoating and Technology B.V., 1619 BJ Andijk (NL)
(72) Inventor: The designation of the inventor has not yet been filed
(74) Representative: Abel & Imray LLP

(57) **Abstract**

A process (100) for forming a plurality of seed clusters is disclosed, together with seed clusters such as those formed by the process, and rotary seed coating apparatus (200). The coated seed clusters (105) each comprise multiple seeds bound together and at least partially coated by a coating composition. The process may comprise spinning a seed batch in a mixing chamber (201) of a seed rotary coating system, spraying a liquid seed binder into the rotating seed bed, wherein the liquid seed binder has a viscosity of at least 150 cP (as measured according to ASTM-D2196-20 at a temperature of 20°C and at 50 rpm), continuing agitation of the seed batch for an agglomeration time interval to form seed clusters in the rotating seed bed, and adding after the agglomeration time interval a seed coating powder to the rotating seed bed, thereby halting seed cluster growth and providing a mixture of coated seed clusters.

## Description

### Field of the Invention

The present invention concerns processes for forming coated seed clusters, seed clusters (e.g. made by such processes) and seed mixing and coating equipment. More particularly, but not exclusively, the present invention concerns a process for forming coated seed clusters each comprising multiple seeds bound together and at least partially coated by a coating composition. The clusters optionally comprise clusters of multiple seeds including at least two different seed species.

### Background of the Invention

Seed coatings are commonly employed to protect seed exteriors, add active compounds, add colourants and/or alter the size or shape of the seeds, for example to achieve more efficient planting and improved germination rates. Various approaches to seed coating have been implemented including film coating, pelleting and encrusting. Film coating generally involves applying a relatively thin coating layer to the seeds. Various pelleting methods exist, including moulding, extruding, and roll-/ball-pelleting. Encrusting typically adds a larger amount of coating as compared to film coating, but with more retention of original seed shape as compared to pelleting. Often, when seeds are pelleted or encrusted using conventional methods, the seed surface is no longer visible and the coating fully covers the seed.

Depending on the amount of coating used, seed coating treatments may result in changes in the weight, shape and size of the seed, which may facilitate easier handling of the seed, especially during planting. Such increases in size, weight and or uniformity of shape may be especially useful when seeds are very small and/or have an irregular surface morphology. Addition of a coating layer to the seed may also improve the durability and/or hardness of the seed, and/or promote formation of a free-flowing seed mix.

Seed coatings may comprise a one or more binder material and a bulking material and/or one or more functional materials. Binder materials often include natural and synthetic products (such as polymer compositions), are generally supplied in liquid form, and are used to adhere other coating components to the seed. In a given seed coating, a base binder may be applied directly to a seed (e.g. together with one or more other coating components), and a top binder may be applied as a further layer to provide the top surface of the coating. Bulking materials are often included to increase the mass of the coated seed, and are generally inert, non-toxic solid particulate materials suitable for blending with the binder. Functional materials include surfactants (which may improve compatibility between individual coating components and/or between coating components and seeds themselves), colourants (or pigments), preservatives, insecticides, fungicides and/or bio-stimulants.

Various methods exist for seed coating, depending on the intended characteristics of the coated seed product, the nature of the coating and the type of seeds. Often, seed coating methods are batch processes.

Pelleting methods may involve placing one or more seeds and a coating mixture in a mould and allowing the mixture to solidify, passing a mixture of seeds and coating material through an extruder, and/or tumbling a mixture of coating material and seeds in a pan. When a mixture of coating material and seeds is tumbled in a pan (often a rotating pan), coating material agglomerates around seeds as the pan is agitated, building up into larger balls the longer the process continues. A characteristic feature of seed pellets is a high coating : seed ratio (meaning that a large amount of coating is present in the final pellet, with the mass of coating being many times the mass of seed in each pellet). Such processes may produce relatively consistently sized, high mass coated seed products, but are often expensive and time-consuming to perform.

Film coating and encrusting methods may utilise a rotary coating system (such as a rotor stator, also referred to as a 'rotostat', mixer device), which provides an effective and efficient system for film coating and encrusting. A rotary coating system comprises a static, cylindrical chamber containing a rotor disc at the base, extending across the diameter of the cylindrical chamber. Rapid spinning of the rotor disc causes seeds loaded into the chamber to tumble and rotate, pushing out against and rising up the sides of the chamber. Deflectors are often mounted on the chamber side walls to promote greater turbulence in the rotational flow of the seeds. Coating material dispersed into the rotating body of seeds adheres to the seed surface, building up a coating. Often, the rotary coating system is provided with an atomiser (such as a central rotary atomiser and/or spinning disc), which may take the form of an additional, smaller disc mounted on a spindle some distance above the base of the chamber. Liquid coating materials (including binder) may, for example, be poured or dripped through an inlet directly onto the spinning disc of the atomiser, spraying fine droplets of the liquid into the rotating body of seeds. Particulate (e.g. power) materials may be added to the mixture before, during or after addition of liquid components, sticking to binder-coated seeds to build up the overall coating. Further coating components may be added as required. Once the required coating is applied, the coated seeds may be poured out of the chamber and used as required. Thus, a process for rotary coating of seeds may comprise building up components of the coating around each seed as it is agitated in the rotary coating system. Typically, water and/or a binder is added first to produce a tackifying surface of the seed which further additives can adhere to. A powder may then be added to prevent seeds from clumping, and therefore allowing the coated seeds to free flowing during subsequent drying and handling. Seeds coatings are generally made to be hydrophilic and/or soft enough for the coating to dissolve in water, allowing the seed to germinate in the field, but strong enough to avoid fragmentation when handling. An example of a rotostat device is the AI Rotary 4 Lab Rotary coater available from CentorEurope. As disclosed in I. Afzal et al. "Modern Seed Technology: Seed Coating Delivery Systems for Enhancing Seed and Crop Performance", Agriculture 2020, 10, 526, the low viscosity liquids are recommended for use as binders when coating with rotostat equipment to achieve effective atomisation. In particular, it is disclosed that, in preparing binders in water, solution viscosity must be low for complete atomization of the liquid onto seeds, preferably <100 centipoise (cP), or <0.1pascal-second (Pa-s).

Recent changes to agricultural regulation have resulted in changes to growing patterns. For example, some regulations now dictate that fodder and cover crops should be planted alongside the main crop in a field to improve soil quality, promote nutrient regeneration and subsequently boost overall crop yield. Also, some regulations require that fields are over-wintered with fodder or cover crops rather than left bare. The value and effectiveness of such fodder and cover crops is improved by sowing a mixture of seed species together, optimising both fodder nutrient content and soil regeneration. However, loose seeds for different fodder crops can be challenging to sow together. For example, there are often significant differences in the size and weight of such seeds, and when mixtures are loaded into hoppers of seed drills or seed spreaders there is a tendency for seeds to settle out during transport and operation of the machinery. This poses a significant problem when sown as it results in a nonhomogeneous distribution of seeds across a field, sometimes with all of the smaller, heavier seeds being sown in one corner of the field, and the larger, lighter seeds being concentrated at the far end. It will be appreciated that fodder, grass and/or cover crops are typically relatively low value, and so complicated and costly equipment modifications and/or repeat sowing is not feasible. Instead, fast, cost-effective and simple sowing processes using conventional seed handling and sowing equipment are required.

One approach to facilitate combined sowing of multiple species is to form seed clusters that bind multiple different seed species together into pellets or balls. Commercial examples of such approaches include wildflower seed balls in which up to 100 seeds may be encapsulated in a clay and compost mixture. However, such products are relatively costly and time-consuming to produce, and generally intended for manual/hand-sowing. As such, they are not suitable for agricultural applications. Another approach is to form moulded or extruded pellets comprising seeds encapsulated in a binder material. Although seed pellets usually just one seed, pellets comprising multiple seeds have been produced. US Patent No. US5623781A (Incotec) discloses pills or pellets containing two or more seeds and an inert carrier material, where the seeds are distributed in a multitude around the core. However, the pellet requires an inert bead or granule, for example, glass or plastic to act as the core. Westbrook AS et al., "Multi-Seed Zea Pellets (MSZP) for increasing agroecosystem biodiversity", Weed Science. 2023;71(2):160-171 reports a multi-seed pellet which holds multiple seeds of the same species, moulded to resemble the size and shape of a corn seed to enable planting using a corn planter. The pellets are composed of diatomaceous earth, wood powder, and a digested cornstarch, which acts as a binder. Similarly, Sikhao P et al., "Development of seed agglomeration technology using lettuce and tomato as model vegetable crop seeds", Scientia Horticulturae. 2015; 184(5): 85-92 reports a multi-seed pelleting technique whereby a mixture of diatomaceous earth filler, binder and tomato and lettuce seeds were moulded into cylindrical and oval pellets. A common feature of seed balls/pellets us the use of large qualities of binder, significantly increasing the cost of production, especially in the case of high-volume products such as fodder/grass/cover crop seeds. Thicker coatings can also impair germination, especially of smaller seeds often desirable in fodder and cover crops. Furthermore, bulky and brittle seed balls and pellets are not well suited to use in conventional, simple seed handling and agricultural equipment, with balls and pellets damaged during transport and use crumbling and breaking up and intact balls and pellets being too large for use with conventional spreaders and drills. Watersoluble, wax-based formulations have been utilised in an attempt to reduce pellet and ball fragility, but the relatively high cost of such products typically renders them unsuitable for industrial scale farming applications. Furthermore, incorporation of other useful coating additives may not be possible.

M. D. Masen et al., "Agglomerating seeds to enhance native seedling emergence and growth", Journal of Applied Ecology 2012, 49, 431-438 discloses the results of a study into the benefits of agglomerating multiple seeds into single pellets. The intention of the study was to evaluate whether or not the presence of multiple seeds (of the same species) in a single pellet would lead to an improvement in seedling emergence in crusting soil. Seed pellets were formed by first base coating seeds individually with a mixture of Selvol-205^{®} and diatomaceous earth, and then prompting formation of clusters by adding further Selvol-205^{®} and diatomaceous earth. Selvol-205^{®} is a low viscosity polyvinyl alcohol, having a viscosity of 5.2-6.2 cps as a 4% solution. M. D. Masen et al. reports that Selvol-205^{®} was used as an 8% solids solution. WO2010/111309A1 (Brigham Young University, inventors M. D. Madsen et al.) discloses similar, mono-species seed clusters made by an analogous method using polymer 300^{©} (Germains Technology Group) adhesive binder (1/1 water/polymer) and crushed limestone or M-Binder tackifier (M-Binder is derived from the seed of the plantego plant, *Plantago insularis*). Prior to agglomeration using the binder, seeds are first individually coated with a plant protectant layer, comprising a polymer 100^{©} (Germains technology Group) binder (3/1 water/polymer) and crushed limestone. EP3949709A1 (Alpha Semences) discloses coupling of seeds of different sizes in order to produce seed agglomerates. Few technical details are disclosed, beyond a general disclosure that a molasses or glue binder may be used, together with clay to form the coupled grains. Seeds are individually coated prior to coupling.

### Summary of the Invention

According to a first aspect, the present invention provides a process for forming a plurality of coated seed clusters, wherein the coated seed clusters each comprise multiple seeds bound together and at least partially coated by a coating composition. Optionally, the coating composition comprises seed binder (e.g. liquid seed binder) and powder. Preferably, the clusters comprise clusters of multiple seeds comprising at least two different seed species. It has been found that such seed clusters are especially useful for sowing of mixed species crops, such as cover, grass and/or fodder crops. The process comprises agitating a seed batch in a mixing chamber of a rotary coating system (such as a rotor stator) to provide a rotating seed bed, optionally wherein the seed batch comprises a mixture of seeds of at least two different species. In other words, the process may comprise spinning the seed batch. Alternatively, the seed bed comprises seeds of only one species. The method further comprises treating the rotating seed bed with a seed binder, for example by spraying a liquid seed binder onto the rotating seed bed. Optionally the liquid seed binder has a viscosity of at least 150 cP (as measured according to ASTM-D2196-20 at a temperature of 20°C and at 50 rpm). It has been found that seed binders having such a viscosity (that is, a relatively high viscosity) allow for effective and relatively rapid agglomerations of seeds into stable clusters. It will be understood that stable clusters are clusters of seeds that maintain their shape, size and/or general integrity during manufacture and routine seed handling. Yet further, binders having such a viscosity allow for effective, rapid and controlled clustering of seeds of different sizes, shapes, surface textures and weights, thereby providing an effective and efficient method of forming seed clusters that is well suited to mixed, relatively low value seed compositions. The method further comprises continuing agitation of the seed batch for an agglomeration time interval to form seed clusters in the rotating seed bed. It will be understood that agitation may continue at the same or a different rate following treatment of the seed bed with the seed binder. It has been found that the agglomeration time interval allows for controlled growth of seed clusters. The method further comprises, after the agglomeration time interval, adding a seed coating powder to the rotating seed bed, thereby halting seed cluster growth and providing a mixture of coated seed clusters. It will be understood that the seed coating powder is added at the end of the agglomeration time interval, and ends the agglomeration time interval. In other words, the agglomeration time interval will be understood extend from (e.g. conclusion of) addition of the binder to (e.g. commencement of) addition of the powder. It has been found that the coating powder sticks to the binder, thereby providing a powder layer around the seed clusters that prevents seed clusters sticking together and the further growth of clusters into excessive sizes.

Optionally, the agglomeration time interval is of a length sufficient for at least 90% of the seeds of the seed batch to be bound into seed clusters comprising at least two seeds, for example a length sufficient for at least 95% of the seeds of the seed batch to be bound into seed clusters comprising at least three seeds. In other words, the process comprises adding the seed coating powder once at least 90% of the seeds of the seed batch are bound into seed clusters comprising at least two seeds, for example once at least 95% of the seeds of the seed batch are bound into seed clusters comprising at least three seeds. Additionally or alternatively, the agglomeration time interval is optionally of a length sufficiently short for at least 90% of the seeds of the seed batch to be bound into seed clusters comprising no more than 20 seeds, for example a length sufficiently short for at least 95% of the seeds of the seed batch to be bound into seed clusters comprising no more than 15 seeds. In other words, the process comprises adding the seed coating powder before fewer than 90% of the seeds of the seed batch become bound into seed clusters comprising more than 20 seeds, for before fewer than 95% of the seeds of the seed batch become bound into seed clusters comprising more than 15 seeds. It has been found that such cluster sizes provide a useful balance between effective co-sowing of seed species and processability in conventional seed handling and agricultural equipment. Optionally, the agglomeration time interval is at least 30 seconds, for example from 30 seconds to 30 minutes. Optionally, the agglomeration time interval is selected according to the size of the seed batch. For example, the agglomeration time interval is at least 30 seconds (e.g. from 30 seconds to 10 minutes) for a seed batch comprising up to 5 kg seeds, at least 1 minute (e.g. from 1 minute to 20 minutes) for a seed batch comprising 6 kg to 10 kg seeds, at least 2 minutes (e.g. from 2 minutes to 30 minutes for a seed batch comprising 11 kg to 20 kg seeds), and/or at least 4 minutes (e.g. from 4 minutes to 1 hour) for a seed batch comprising 21 kg or more seeds.

Optionally, the seed coating powder comprises talc. It has been found that, especially in combination with the binders described herein (such as a binder having a viscosity of at least 150 cP, as measured according to ASTM-D2196-20 at a temperature of 20°C and at 50 rpm), talc-based seed coating powders allow for a particularly convenient and efficient process. More particularly, it has been found that talc-based coating powders are effective at forming an outer layer over binder-coated seed clusters, thereby rapidly controlling cluster growth. Furthermore, it has been observed that talc-based coating powders are surprisingly effective at keeping seed clusters free-flowing and keeping coating equipment and seed handling equipment clean and free from binder residues. Without wishing to be bound by theory, it is believed that talc-based coating powders preferentially stick to the surface of relatively viscous binder compositions, rather than absorbing and/or partially dissolving into the binder. Optionally the coating powder comprises at least about 40 wt%, such as at least about 60 wt%, for example at least about 80 wt% talc, based on the weight of the coating powder. Alternatively, the coating powder is talc. It will be understood that talc, also referred to as talcum, is a clay mineral composted of hydrated magnesium silicate, for example having the chemical formula Mg₃Si₄O₁₀(OH)₂.

Optionally, the liquid seed binder has a viscosity of about 150 to about 1600 cP, such as about 250 to about 1200 cP, for example about 350 to about 1000 cP (as measured according to ASTM-D2196-20 at a temperature of 20°C and 50 rpm). It has been found that such binder viscosities provide for particularly effective control of cluster growth, and the formation of stable clusters. For example, binders having such viscosities may provide a useful balance between relatively rapid cluster formation, cluster strength during formation and handling, and avoiding excessive clustering during the agglomeration time interval. Particularly preferred is a combination of such binder viscosities with coating powders comprising talc, as described herein.

Optionally, the seed binder comprises at least about 25 wt% water, such as at least about 50 wt% water, for example at least about 75 wt% water, based on the weight of the seed binder. For example, the seed binder may be a liquid seed binder comprising or consisting of an aqueous solution of a binder material and water. Additionally or alternatively, the seed binder comprises about 25 wt% to about 95 wt% water, such as about 40 wt% to about 90 wt% water, based on the weight of the seed binder. Optionally, the seed binder comprises at least about 5 wt% of a binder material, such as at least about 10 wt% of a binder material.

Optionally, the seed binder comprises a natural, non-synthetic binder material, such as a carbohydrate-based and/or sugar-derived binder material. It has been found that such binder materials, for example particularly in combination with a talc-containing coating material, provide a particularly effective balance between rapid and stable cluster growth, controlled cluster size, and avoidance of residues clogging seed mixing, coating and/or handing equipment.

Optionally, the process comprises adding a further portion of the liquid seed binder following addition of the seed coating powder, and then adding a further portion of the seed coating powder, for example after a further agglomeration time. For example, the process optionally comprises continuing agitation of the coated seed clusters to form a rotating seed cluster bed, spraying an additional portion of liquid seed binder onto the rotating seed cluster bed, wherein the liquid seed binder has a viscosity of at least 150 cP (as measured according to ASTM-D2196-20 at a temperature of 20°C and at 50 rpm), continuing agitation for a further agglomeration time interval to form larger seed clusters in the rotating seed cluster bed, and adding after the further agglomeration time interval a seed coating powder to the rotating cluster bed, thereby halting further seed cluster growth and providing a mixture of larger coated seed clusters. It will be understood that the seed coating powder is added at the end of the further agglomeration time interval, and ends the agglomeration time interval. In other words, the further agglomeration time interval will be understood extend from (e.g. conclusion of) addition of the additional binder to (e.g. commencement of) addition of the powder. It will be appreciated that alternating further additions of binder and powder may be continued until clusters of the desired size are obtained. Optionally, the process comprises at least three, such as at least four, for example at least five, such rounds of treatment, each round including addition of a portion of binder, agitation for an agglomeration period, and then addition of a portion of powder. Preferably, the binder and/or powder is the same in each set of additions. It has been found that such sequential addition of portions of binder and powder can allow improved control of cluster growth, for example avoiding excessive agglomeration when large clusters are desired and/or large batches of seeds are treated.

Optionally, the process further comprises adding one or more additional coating components to the seed bed together with or prior to addition of the seed coating powder (preferably prior to). It will be appreciated that such additional coating components may optionally be added at any point prior to addition of the seed coating powder, for example before, during or after addition of the seed binder, preferably after addition of the seed binder (i.e. during the agglomeration time interval). Examples of suitable additional coating components include pigments and/or colorants, insecticides, fungicides and/or bio-stimulants. It will be appreciated that such additional coating components may be in the form of powders and/or solutions, and may be added together or separately.

Optionally, seed binder and seed coating powder are added in a weight ratio of from about 0.2 to about 2, for example about 0.3 to about 1.5, such as about 0.6 to about 1.2. It will be understood that 'seed binder' includes binder material and any diluent forming part of the seed binder (such as water). It will be understood that when the ratio is 0.2, the weight of seed coating powder is about 5 times the weight of seed binder. Optionally, seed coating powder is added at a weight ratio of seed coating powder to seed of from about 0.2 to about 4, such as about 0.3 to about 3, for example about 0.4 to about 1.5. It will be understood that when the ratio is 0.2, the total weight of seeds is about five times the total weight of seed coating powder. Optionally, seed binder is added at a weight ratio of seed binder to seed of from about 0.2 to about 4, such as about 0.3 to about 3, for example about 0.4 to about 1.5. It will be understood that when the ratio is 0.2, the total weight of seeds is about five times the total weight of seed binder. It will be understood that 'seed binder' includes binder material and any diluent forming part of the seed binder (such as water). It has been found that such ratios between seed binder, seed coating powder and/or seeds provide a useful balance between cluster stability, overall cluster size, cluster mass and cost of materials.

Optionally, the seed batch comprises at least about 10% by quantity of seeds of each of at least two seed species, such as at least about 20% by quantity. In other words, the seed batch optionally comprises at least about 10% (e.g. at least about 20%) seeds of a first species, and at least about 10% (e.g. at least about 20%) seeds of a second species, wherein % seeds is % seeds by quantity Alternatively, the seed batch optionally comprises seeds of only one species. It will be understood that 'by quantity' refers to the number of seeds. Optionally, the seed batch comprises seeds of at least three different seed species, such as at least four different seed species. Optionally the seed batch comprises at least about 10% by quantity of seeds of each of the different seed species, such as at least about 20% by quantity of seeds of each of the different seed species. Optionally, the seed batch comprises a first species of seed having a first average maximum dimension and a second species of seed having a second average maximum dimension, wherein the first average maximum dimension is at least two times, such as at least four times, for example at least eight times, the second average maximum dimension. Optionally, the seed batch comprises a first species of seed having a first thousand seed weigh a second species of seed having a second thousand seed weight, wherein the first thousand seed weight is at least two times, such as at least five times, for example at least ten times, the second thousand seed weight. It will be understood that 'thousand seed weight' (also referred to as 'thousand grain weight' and/or 'thousand kernel weight') is the average weight of a thousand seeds of a given species. Optionally, the seed batch comprises a first species of seed having an average aspect ratio of no more than about 1.5, such as no more than about 1.3, for example no more than about 1.1, and a second species of seed having an average aspect ratio of at least about 2, such as at least about 3, for example at least about 5, wherein the aspect ratio of a seed is the ratio between the largest dimension and the smallest dimension.

Optionally, the rotary coating system comprises a rotor disc located within a cylindrical mixing chamber, wherein the rotor disc is configured and arranged to spin within the chamber in order to form the rotating seed bed. Optionally, the rotary coating system is the rotary coating system of the third aspect of the invention. Optionally, the process comprises loading separate seed species into a mixing chamber of the rotary coating system (e.g. rotor stator seed coater) via separate seed feed inlets, for example separate seed feed inlets leading into the mixing chamber from outside the mixing chamber. It has been found that loading through separate inlets can allow for efficient simultaneous loading of seed species from separate storage hoppers.

Optionally, the seed batch is a first seed batch, the seed clusters are first seed clusters and the agglomeration time interval is a first agglomeration time interval. Optionally, process further comprises adding a second seed batch to at least a portion of the first seed clusters to form a seed and cluster mixture, wherein the second seed batch includes seeds of a species different to the seed species of the first seed batch. It will be appreciated that the second seed batch may optionally be added before, during or after adding seed coating powder to halt seed cluster growth, optionally before or after, preferably after. Thus, the second seed batch is preferably added to coated seed clusters formed from the first seed batch (i.e. the first seed clusters are preferably first coated seed clusters). Optionally, the process comprises agitating the seed and cluster mixture in a mixing chamber of a rotary coating system (such as a rotor stator seed coater) to provide a rotating seed and cluster bed. In other words, the process may comprise spinning the seed and cluster mixture. Optionally, the process comprises treating the rotating seed and cluster bed with a seed binder (e.g. by spraying a liquid seed binder onto the rotating seed and cluster bed). Preferably, the seed binder has a viscosity of at least 150 cP (as measured according to ASTM-D2196-20 at a temperature of 20°C and 50 rpm). It will be appreciated that the seed binder with which the rotating seed and cluster bed is treated may be the same as or different to the seed binder used in formation of the first seed clusters. For example, the first seed clusters may be formed using a first seed binder, and the first seed cluster and seed mixture may be treated with a second seed binder, wherein the first binder and the second seed binder are the same or different, preferably the same. Additionally or alternatively, when the seed binder is different: (1) the second seed binder may for example have a viscosity higher than the viscosity of the first seed binder, such as at least 20 cP, for example at least 40 cP higher (as measured according to ASTM-D2196-20 at a temperature of 20°C and 50 rpm); or (2) the second seed binder may for example have a viscosity lower than the viscosity of the first seed binder, such as at least 20 cP, for example at least 40 cP lower (as measured according to ASTM-D2196-20 at a temperature of 20°C and 50 rpm). Optionally, the process comprises continuing agitation of the seed and cluster mixture to form second seed clusters in the rotating seed and cluster bed, wherein agitation continues for a second agglomeration time interval. Optionally, the process comprises, after the second agglomeration time interval, adding a seed coating powder to the rotating seed and cluster bed, thereby halting second seed cluster growth and providing a mixture of coated second seed clusters. It will be appreciated that the seed coating powder may be the same as, or different to, the seed coating powder used in formation of the first seed clusters. It will be further appreciated that the seed binder and/or seed coating powder may, for example, be as described herein, for example in relation to first seed clusters. For example, the seed binder with which the mixture of first seed clusters and seeds is treated may optionally have the viscosity described herein and/or be a natural, non-synthetic binder material, such as a carbohydrate-based and/or sugar-derived seed binder, and/or the coating powder added to the second seed clusters may optionally comprise talc, for example in the amounts described herein.

Optionally, the second agglomeration time interval is of a length sufficient for at least 90% of the seeds of the second seed batch to be bound to the first seed clusters to form the second seed clusters, and/or the second agglomeration time interval is of a length sufficiently short for at least 90% of the second seed clusters to comprise no more than 5 of the seeds of the second seed batch.

Optionally, the coated seed clusters are partially coated such that at least a portion of at least one seed of the cluster is free from the coating, for example wherein said at least one seed is positioned at an outside edge or face or the seed cluster. For example, it may be that when such clusters are inspected, at least a portion of the surface of one or more seeds is visible to the naked eye. It has been found that partial coating provides a useful balance between cluster integrity during manufacture and handing, and ability of the cluster to break up naturally when sown and/or when seeds germinate.

Optionally, the process comprises applying a further binder to the coated seed clusters (e.g. the first and/or second seed clusters). For example, the process optionally further comprises agitating the coated first and/or second seed clusters in a mixing chamber of a seed rotary coating system (e.g. a rotor stator seed coater) to provide a rotating cluster bed, and treating the rotating cluster bed with a further seed binder (for example by spraying a further seed binder onto the rotating cluster bed). It will be understood that the seed rotary coating system may be the same or a different system as used to form the coated seed clusters (e.g. the first and/or second seed clusters). Thus, the process may comprise spinning the clusters. Optionally, the further binder is a liquid seed binder having a viscosity of no more than about 100 cP (as measured according to ASTM-D2196-20 at a temperature of 20°C and 50 rpm). Optionally, the process comprises adding a further seed coating powder to the rotating cluster seed bed to provide a mixture of film-coated seed clusters, for example a free-flowing mixture of film-coated seed clusters. It will be understood that film-coated seed clusters may, optionally, have at least a substantially continuous coating across the entire outer surface of the cluster. It has been found that a lower viscosity binder may, for example, be added to such a mixture of seed clusters without causing further agglomeration, thereby allow for an additional coating to be applied. Optionally, the process comprises adding one or more additional coating components to the cluster bed together with or prior to addition of the further seed coating powder (preferably prior to). It will be appreciated that such additional coating components may optionally be added at any point prior to addition of the further seed coating powder, for example before, during or after addition of the further seed binder, preferably after addition of the further seed binder. Examples of suitable additional coating components include pigments and/or colorants, insecticides, fungicides and/or bio-stimulants. It will be appreciated that such additional coating components may be in the form of powders and/or solutions, and may be added together or separately. It will be appreciated that the further binder may be any suitable seed binder, including natural and/or synthetic binders, and that the further seed coating powder may be any suitable coating powder, such as dolomite-based, calcium carbonate-based and/or talc-based coating powders. Optionally, the further seed binder has a viscosity of no more than about 50 cP, such as no more than about 20 cP (as measured according to ASTM-D2196-20 at a temperature of 20°C and 50 rpm).

Optionally, further seed binder and further seed coating powder are added in a weight ratio of from about 0.2 to about 1.5, for example about 0.3 to about 1. It will be understood that when the ratio is 0.2, the weight of further seed coating powder is about 5 times the weight of further seed binder. Optionally, further seed coating powder is added at a weight ratio of further seed coating powder to seed of from about 0.25 to about 4, such as about 0.5 to about 3, for example about 0.75 to about 1.5. It will be understood that when the ratio if 0.25, the total weight of seeds is about four times the total weight of further seed coating powder.

Optionally, amounts of further seed binder and further seed coating are added to provide partial coating of the clusters, for example so that at least a portion of at least one seed of the cluster is free from the coating. For example, it may be that when such clusters are inspected, at least a portion of the surface of one or more seeds is visible to the naked eye.

Optionally, the first and second species include one or more of (e.g. are selected from) legumes (such as *Vicia faba* (Field bean), *Vicia sativa* (Common vetch), *Trifolium incarnatum* (Crimson clover), *Trifolium pratense* (Red clover), *Medicago sativa* (Alfalfa), *Lupinus spp.* (Lupins), *Pisum sativum* (Field pea)) and non-legumes (such as *Brassica napus* (Rapeseed), *Phacelia tanacetifolia* (Phacelia), *Sinapis alba* (White mustard), *Raphanus sativus* (Oilseed radish), *Secale cereale* (Rye), *Avena sativa* (Oats)), for example wherein the first and second species include at least one of said legumes and at least one of said non-legumes. Additionally or alternatively, the first and second seed species comprise fodder crop seed species, such as legume, grass and/or other species. Examples of suitable legume fodder crop species include *Medicago sativa* (Alfalfa), *Trifolium pratense* (Red clover), *Trifolium repens* (White clover), *Vicia sativa* (Vetch), *Lathyrus sativus* (Grass pea). Examples of suitable grass fodder crop species include *Lolium perenne* (Perennial ryegrass), *Lolium multiflorum* (Italian ryegrass), *Dactylis glomerata* (Orchardgrass/Cocksfoot), *Festuca arundinacea* (Tall fescue), *Panicum virgatum* (Switchgrass), *Sorghum bicolor* (Forage sorghum), *Zea mays* (Forage maize). Examples of other suitable fodder crop species include *Brassica napus* (Forage rape), *Brassica oleracea* (Kale), *Beta vulgaris* (Fodder beet), *Cichorium intybus* (Chicory). Additionally or alternatively, the first and second seed species comprise grass seed mix species (in other words, species commonly used in gass mixes), for example including cool-season grasses, warm season grasses and/or legumes. Examples of suitable cool-season grasses include *Lolium perenne* (Perennial ryegrass), *Festuca arundinacea* (Tall fescue), *Poa pratensis* (Kentucky bluegrass), *Dactylis glomerata* (Orchardgrass), *Festuca rubra* (Red fescue). Examples of suitable warm-season grasses include *Cynodon dactylon* (Bermudagrass), *Panicum virgatum* (Switchgrass), *Sorghastrum nutans* (Indiangrass). Examples of suitable legumes include *Trifolium repens* (White clover), *Medicago lupulina* (Black medic).

Optionally, the seed clusters comprise two or more, such as three or more, for example four or more, seed species including one or more of (e.g. selected from) *Vicia faba* (Field bean), *Vicia sativa* (Common vetch), *Trifolium incarnatum* (Crimson clover), *Trifolium pratense* (Red clover), *Medicago sativa* (Alfalfa), *Lupinus spp.* (Lupins), *Pisum sativum* (Field pea), *Brassica napus* (Rapeseed), *Phacelia tanacetifolia* (Phacelia), *Sinapis alba* (White mustard), *Raphanus sativus* (Oilseed radish), *Secale cereale* (Rye), *Avena sativa* (Oats). Optionally, the seed clusters comprise two or more, such as three or more, for example four or more, seed species including one or more of (e.g. selected from) *Medicago sativa* (Alfalfa), *Trifolium pratense* (Red clover), *Trifolium repens* (White clover), *Vicia sativa* (Vetch), *Lathyrus sativus* (Grass pea), *Lolium perenne* (Perennial ryegrass), *Lolium multiflorum* (Italian ryegrass), *Dactylis glomerata* (Orchardgrass/Cocksfoot), *Festuca arundinacea* (Tall fescue), *Panicum virgatum* (Switchgrass), *Sorghum bicolor* (Forage sorghum), *Zea mays* (Forage maize), *Brassica napus* (Forage rape), *Brassica oleracea* (Kale), *Beta vulgaris* (Fodder beet), *Cichorium intybus* (Chicory). Optionally, the seed clusters comprise two or more, such as three or more, for example four or more, seed species including one or more of (e.g. selected from) *Lolium perenne* (Perennial ryegrass), *Festuca arundinacea* (Tall fescue), *Poa pratensis* (Kentucky bluegrass), *Dactylis glomerata* (Orchardgrass), *Festuca rubra* (Red fescue), *Cynodon dactylon* (Bermudagrass), *Panicum virgatum* (Switchgrass), *Sorghastrum nutans* (Indiangrass), *Trifolium repens* (White clover), *Medicago lupulina* (Black medic).

Optionally, the process further comprises drying the seed clusters, for example to reach an absolute moisture content of no more than about 14 wt%. Any suitable method of drying may be used.

Optionally, the process comprises forming the coated seed clusters as a batch of coated seed clusters, such as a first batch of coated seed clusters. Optionally, the process comprises additionally forming a batch of individually coated seeds, for example seeds of a different species and/or size to seeds used to form the batch of coated seed clusters, and optionally combining the batches together to form a seed mixture comprising the coated seed clusters and the individually coated seeds. Optionally, the process comprises additionally forming a second batch coated seed clusters, for example comprising one or more seeds of a different species and/or size to seeds used to form the first batch of coated seed clusters, and optionally combining the batches together to form a seed mixture comprising the first and second coated seed clusters. Optionally, the seeds of the first coated seed clusters are all of species different to the species of seeds of the second coated seed clusters. Optionally, the process of forming individually coated seeds and/or second coated seed clusters otherwise comprises any feature as described herein in relation to the first aspect of the invention, for example in relation to the binder and/or powder. For example: (1) such individual coated seeds are prepared by the process otherwise described in relation to the first aspect of the invention, except that seeds of only one species are used; (2) such second seed clusters are prepared by the process otherwise described in relation to the first aspect of the invention.

According to a second aspect, the present invention provides a seed cluster batch comprising multi-seed clusters, for example multi-seed clusters made according to the process of the first aspect of the invention. Optionally, at least 90% of the multi-seed clusters comprise seeds of at least two different species, optionally at least four different species. Optionally, the seed clusters comprise a talc-based seed coating powder and a natural, non-synthetic binder, such as a seed coating powder and a seed binder as described in relation to the first aspect of the invention. It will be appreciated that the seed clusters of the seed cluster batch may comprise any feature described in relation to the process of the first aspect of the invention, and vice versa. For example, the seed clusters of the seed cluster batch of the second aspect of the invention may optionally feature the types and amounts of seeds, seed binders, seed coating powders and/or additional components as described in relation to the process of the first aspect of the invention. Furthermore, the process of the first aspect of the invention may for example be performed and/or configured in order to produce a seed cluster batch according to the second aspect of the invention, and/or seed clusters produced by the process of the first aspect of the invention may for example have cluster compositions and/or sizes as described in relation to the seed clusters of the seed cluster batch of the second aspect of the invention.

Optionally at least 50% of the seed clusters comprise (i) a first species of seed having a first average maximum dimension and a second species of seed having a second average maximum dimension, wherein the first average maximum dimension is at least two times, such as at least four times, for example at least eight times, the second average maximum dimension; (ii) a first species of seed having a first thousand seed weight and a second species of seed having a second thousand seed weight, wherein the first thousand seed weight is at least two times, such as at least four times, for example at least eight times, the second thousand seed weight; and/or (iii) a first species of seed having an average aspect ratio of no more than about 1.5, such as no more than about 1.3, for example no more than about 1.1, and a second species of seed having an average aspect ratio of at least about 2, such as at least about 3, for example at least about 5, wherein the aspect ratio of a seed is the ratio between the largest dimension and the smallest dimension.

Optionally, the seed cluster batch comprises seed clusters having a cluster size of from 2 to 4, and seed clusters having a cluster size of from 5 to 8; for example: (i) at least about 10 % of the seed clusters, such as at least about 20% of the seed clusters, have a cluster size of from 2 to 4, and/or (ii) at least about 10 % of the seed clusters, such as at least about 20% of the seed clusters, have a cluster size of from 5 to 8. Additionally or alternatively, the seed cluster batch optionally comprises seed clusters having a cluster size of from 2 to 8, and seed clusters having a cluster size of from 9 to 15; for example: (i) at least about 20% of the seed clusters, such as at least about 30% of the seed clusters, have a cluster size of from 2 to 8, and/or (ii) at least about 20 % of the seed clusters, such as at least about 30% of the seed clusters, have a cluster size of from 9 to 15. Optionally, the seed cluster batch comprises seed clusters having a cluster size of 2 and seed clusters having a cluster size of at least 4, such as at least 6; for example: (i) at least about 10 % of the seed clusters, such as at least about 20% of the seed clusters, have a cluster size of 2, and/or (ii) at least about 10 % of the seed clusters, such as at least about 20% of the seed clusters, have a cluster size of at least 4, such as at least 6. It will be understood that '% of the seed clusters' in % by quantity (i.e. numbers of clusters having a given size). Optionally, the seed clusters of the seed cluster batch have a cluster size standard deviation of at least 0.8, such as at least 1, for example at least 1.1. It will be understood that cluster size is the number of seeds per cluster. It has been found that, particularly for high volume, relatively low value, seed mixes, it is not necessary to have precise control of cluster sizes.

Optionally, the seed cluster batch additionally comprises a batch of individually coated seeds, for example seeds of a different species and/or size to seeds used to form the multi-seed clusters. Additionally or alternatively, the seed cluster batch comprises first and second multi-seed clusters, for example wherein the first multi-seed clusters comprise only seeds of a species different to the species of seeds of the second multi-seed clusters. Optionally, the individually coated seeds and/or second multi-seed clusters coated seed clusters have any feature as otherwise described herein in relation to the second aspect of the invention, for example in relation to the binder and/or powder. For example: (1) such individual coated seeds are substantially the same as the multi-seed clusters, except that seeds are individually coated; (2) such second multi-seed clusters are multi-seed clusters as otherwise described in relation to the second aspect of the invention.

According to a third aspect of the invention, there is provided a seed rotary coating system, for example configured for use with the process of the first aspect of the invention and/or to produce a seed cluster batch according to the second aspect of the invention. Optionally, the seed rotary coating system comprises a mixing chamber for mixing and coating seeds, wherein the apparatus further comprises at least two separate seed feed inlets leading into the mixing chamber from outside the mixing chamber. Optionally, each of the at least two separate seed feed inlets is configured for fluid connection to a separate seed hopper (such as fluidly connected to a separate seed hopper). Optionally, the apparatus comprises at least three, such as at least four, separate seed feed inlets leading into the mixing chamber from outside the mixing chamber. Optionally, each of the at least three, such as each of the at least four, separate seed feed inlets is configured for fluid connection to a separate seed hopper (such as fluidly connected to a separate seed hopper). It has been found that such apparatus provides particularly efficient and effective seed cluster product equipment. Optionally, the seed rotary coating system is or comprises a rotor stator mixing apparatus. Optionally, the apparatus comprises at least one seed coating powder inlet separate from the two or more seed feed inlets, the seed coating powder inlet leading into the mixing chamber from outside the mixing chamber, and optionally being configured for fluid connection to, or fluidly connected to a seed coating powder hopper. Optionally, the seed rotary coating system comprises a static, cylindrical chamber containing a rotor disc at the base, extending at least substantially across the diameter of the cylindrical chamber. Optionally, the system is configured and arranged such that spinning of the rotor disc causes seeds loaded into the chamber to tumble and rotate, pushing out against and rising up the sides of the chamber. Optionally, the system comprises one or more deflectors mounted on a side wall of the chamber, for example configured and arranged to promote turbulence in the rotational flow of the seeds during operation of the rotor disc. Optionally, the rotary coating system comprises an atomiser (such as a central rotary atomiser), for example in the form of an additional, smaller disc mounted on a spindle some distance above the rotor disc.

It will of course be appreciated that features described in relation to one aspect of the present invention may be incorporated into other aspects of the present invention. For example, the process of the first aspect of the invention may incorporate any of the features described with reference to the seed cluster batch of the second aspect of the invention, and/or the seed rotary coating system of the third aspect of the invention, and *vice versa.*

### Description of the Drawings

Embodiments of the present invention will now be described by way of example only with reference to the accompanying schematic drawings of which:
Figure 1 shows a flow chart of an embodiment of a process for forming a plurality of coated seed clusters according to the first aspect of the invention;
Figure 2 shows a schematic drawing of a cut-away side view of a rotary coating system according to the third aspect of the invention;
Figure 3 shows a schematic drawing of a cut-away top plan side view of the rotary coating system of Figure 2;
Figure 4a shows a photograph of a batch of uncoated seeds, and Figure 4b shows an enlarged view of a portion of the photograph of Figure 4a;
Figure 5a shows a photograph of a seed cluster batch according to the second aspect of the invention, and Figure 5b shows an enlarged view of a portion of the photograph of Figure 5a; and,
Figures 6 and 7 show photographs of further seed cluster batches prepared by the method of the present invention and/or according to the present invention.

### Detailed Description

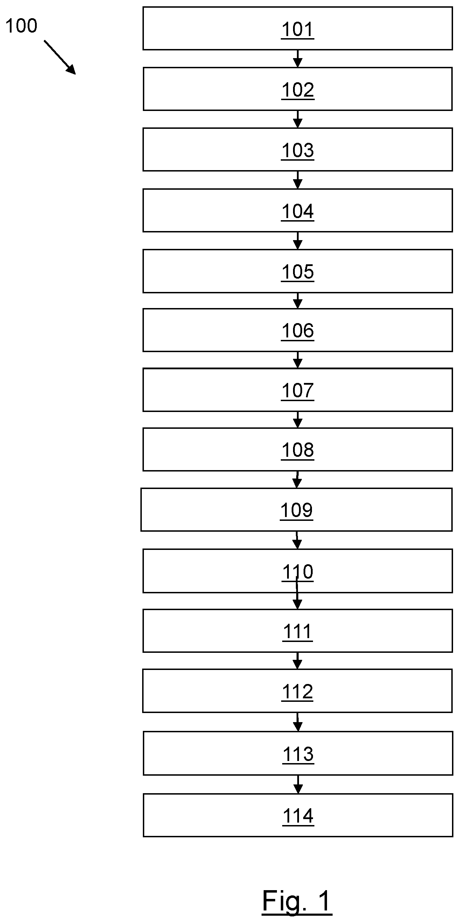

Figure 1 shows a flow chart of an embodiment of a process 100 for forming a plurality of coated seed clusters according to the first aspect of the invention. The process comprises a step of 101 loading a seed batch into the mixing chamber of a seed rotary coating system and initiating rotation of the seeds in the system to provide a rotating seed bed. The seed batch comprises seed of three different species, and of significantly different size and weight. Rotation is initiated by spinning a rotor disc at the bottom of the mixing chamber. Once the rotating seed bed is formed, a liquid seed binder is sprayed onto the seed bed in step 102, providing a rotating mixture of seeds and binder. The binder has a viscosity of at least 150 cP. Rotation of the mixture is continued for an agglomeration period in step 103, the agglomeration period continuing for a period of time sufficient for seed clusters of the desired size to form. Cluster size is estimated by eye by the operator. Subsequently, in step 104, a seed coating powder is added, halting seed cluster growth and providing a mixture of coated seed clusters 105. The seed coating powder comprises talc.

Depending on the desired seed composition of the final cluster product, it may be desired to add additional seeds to the clusters, for example when especially large seeds are combined with smaller seeds. For such clusters, it may be convenient to form first seed clusters with the smaller seeds, then add the larger seeds in an additional series of processing steps. First seed clusters formed in step 105 are combined with additional seeds in the mixing chamber of a seed rotary coating system together, and the mixture of seeds, rotation is initiated to provide a rotating cluster and seed bed 106. Rotation is initiated by spinning a rotor disc at the bottom of the mixing chamber. Once the rotating seed and cluster bed is formed, a liquid seed binder is sprayed into it in step 107, providing a rotating mixture of seeds, clusters and binder. The binder has a viscosity of at least 150 cP. Rotation of the mixture is continued for an agglomeration period in step 108, the agglomeration period continuing for a period of time sufficient for second seed clusters of the desired size to form. Cluster size is estimated by eye by the operator. Subsequently, in step 109, a seed coating powder is added, halting seed cluster growth and providing a mixture of second coated seed clusters 110. The seed coating powder comprises talc. It will be understood that steps 107-109 may be repeated if larger clusters are desired.

It may be desirable to add an additional coating, for example to further strengthen the seed clusters. When such an additional coating is required, the second coated seed clusters may be rotated in the mixing chamber of a rotary mixing system, and rotation initiated 111. Rotation is initiated by spinning a rotor disc at the bottom of the mixing chamber. Once the rotating cluster bed is formed, a further liquid seed binder is sprayed onto it in step 112, providing a rotating mixture of clusters and binder. The further binder has a viscosity of no more than 100 cP. The lower viscosity of the additional binder avoids further agglomeration into larger clusters. Rotation of the mixture is continued so that the clusters are appropriately coated with the further binder. Subsequently, in step 113, a further seed coating powder is added, providing a mixture of free flowing, film-coated seed clusters 114.

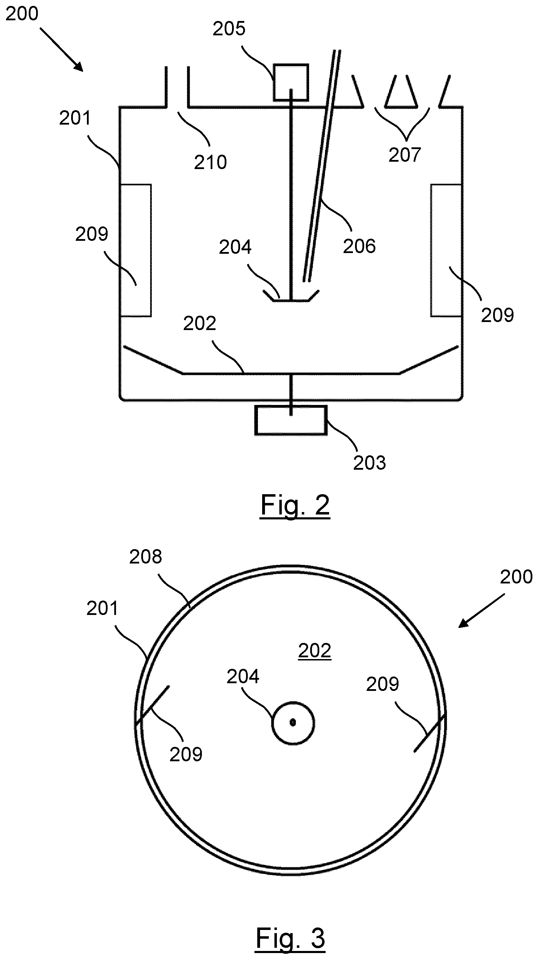

Figure 2 shows a schematic drawing of a cut-away side view of a rotary coating system 200 according to the third aspect of the invention. Figure 3 shows a schematic drawing of a cut-away top plan side view of the rotary coating system 200 of Figure 2. As shown in Figures 2 and 3, the rotary coating system 200 comprises a mixing chamber 201 inside which is mounter a rotor disc 202 driven by a motor 203. Above the rotor disc 202 is mounted a rotary atomiser 204 driven by motor 205. Feed tube 206 allows for material to be dropped onto the rotary atomised 204 in use. The top of the mixing chamber 201 comprises two separate seed feed inlets 207, configured for connection to separate seed hoppers (not shown in Figures 2 and 3), and a powder inlet 210. The inclusion of separate seed feed inlets is a unique feature of the rotary coating system 200, which allows for multiple types of seed to be fed directly into the mixing chamber 201 for treatment according to the process of the first aspect of the invention. In use, seed is fed through one or more seed feed inlets 207 into the mixing chamber 201, the rotor disc 202 is rotated by motor 203 to form a rotating seed bed, binder is added through feed tube 206 while the rotary atomiser 204 is spun by motor 205, and then coating powder is added through the powder inlet 210. The circular rotor disk 202 is located within and spaced apart from the walls of the cylindrical mixing chamber by a gap 208, the gap 208 being sized to allow the rotor disc 202 to rotate freely while preventing seed falling below the rotor disc 202. Deflectors 209 are provided on the walls of the mixing chamber 201 above the rotor disc 202 to cause tumbling/turbulent flow of the seeds in the rotating seed bed. During use, when rotation of the seed bed is initiated by spinning the rotor disk 202, the rotating seed bed rises up the inside of the walls of the mixing chamber 201, and comes into contact with the deflectors which pushes the seeds out from the walls and causes them to fall back down onto the rotor disc 202. It will be appreciated that the rotary coating system 200 may, for example, comprise additional seed feed inlets 207.

It will be appreciated that additional components may be incorporated, for example during the agglomeration period(s) and/or when additional binder is added to provide the film coating.

### Example

The following example is provided to better illustrate the invention. The general procedure is as follows. A mixture of seed is loaded into the mixing chamber of a rotor stator rotary seed mixer, and agitated to create a rotating seed bed. Once the seed is spinning, high viscosity binder is applied by a liquid pump onto a spinning atomiser disc at a pre-determined flow rate dependent on the size of the machine, volume and weight of seed and type of seed mixture. The seeds are wetted by the binder and allowed to form seed clumps, and then seed coating powder is dosed into the mixing chamber. Additional portions of binder and powder may be added to combine (and thus enlarge) clusters, and additional seed may be added together with further high viscosity binder and powder to incorporate additional seeds. Further binder and pigmented powder may be added to overcoat and encapsulate the granules (clusters). The coated and coloured granules are discharged from the seed treatment machine and dried.

Tests performed with fodder crop seed mixes have demonstrated the importance of binder viscosity, and the advantageous use of talc-based coating powders. Tests were carried out with binders of different starting viscosities, and different levels of dilution. It was found that with a lower viscosity binder solution (i.e. a viscosity below 150 cP), clusters either failed to form reliably or had a poor distribution of seed sizes (for example, with larger seeds absent from clusters containing smaller seeds). Surprisingly, and contrary to guidance in seed coating literature, it was found that high binder viscosity allowed for rapid and controlled formation of stable clusters. It was observed that clusters with significant variations in seed count formed, and that seeds were often only partially coated. However, it has been found that such characteristics are not detrimental, and may in some cases be advantageous, particularly when preparing cover crop/fodder crop/grass crop seed clusters. It was further observed that additional, alternating applications of binder and powder allowed for controlled increases in cluster size, and that adding a further seed species (e.g. with larger seeds) together with additional binder and coating after formation of clusters (e.g. with smaller seeds) allowed for particularly effective distribution of seeds between clusters. It was further found that sugar-derived or carbohydrate-derived binders were especially useful (particularly in comparison to synthetic binders), and that talc-containing powders helped further to reduce clogging of equipment.

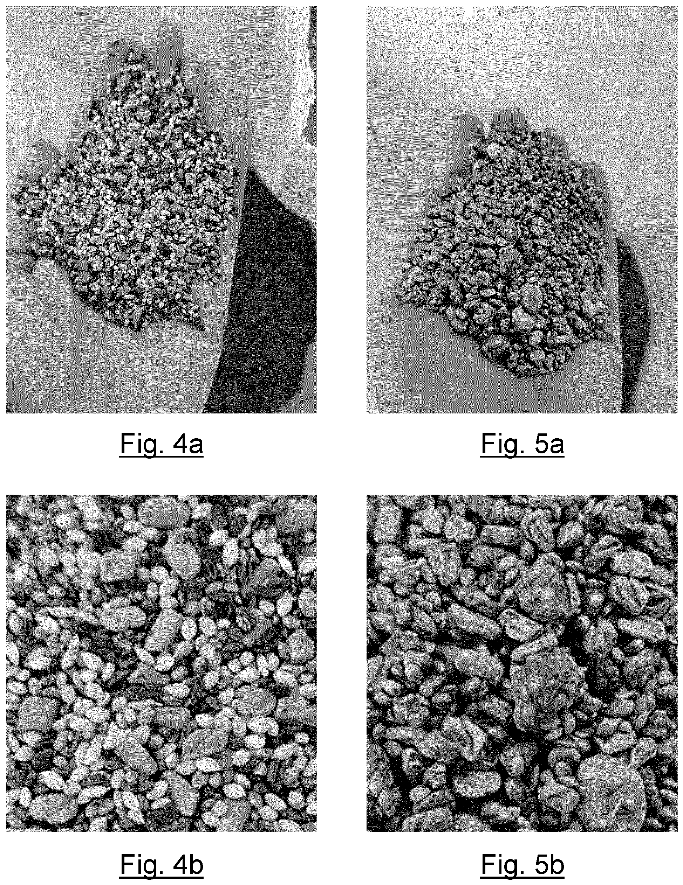

The seed batch shown in the photographs of Figures 4a and 4b comprise seeds of Fenugreek, Moha, Melilot, Phaseli, and Chia. The seed clusters shown in the photographs of Figures 5a and 5b were made from the smaller seeds shown in Figures 4a and 4b, (i.e. seeds of Moha, Melilot, Phaseli, and Chia), and prepared by the method described above. More particularly, about 1 kg of a seed batch comprising Moha, Melilot, Phaseli and Chia was spun in a rotor stator rotary coating system and treated with about 400 g of a sugar-derived binder provided as an aqueous solution having a viscosity of about 400-500 cP (as measured according to ASTM-D2196-20 at a temperature of 20°C and at 50 rpm). After an agglomeration time of about 2 minutes, about 400 g of a talc-based powder was added to halt cluster growth, thereby providing partially coated clusters. Separately, about 0.38 kg seeds of Fenugreek were spun in a rotor stator and treated with about 24 g of the same binder, followed by about 24 g of the same powder to form individually partially coated Fenugreek seeds. The batch of partially coated clusters and the batch of partially coated Fenugreek seeds were separately spun in a rotor stator and additionally coated with a low viscosity binder having a viscosity of <10 cP (as measured according to ASTM-D2196-20 at a temperature of 20°C and at 50 rpm), a calcium carbonate-based binder and a green pigment, thereby producing film-coated, free-flowing clusters and seeds. The low viscosity binder, calcium carbonate-based powder and pigment were added simultaneously. Finally, the coated clusters and Fenugreek seeds were combined to form the mixture shown in Figures 5a and 5b. It is noticeable in Figures 5a and 5b that clusters have varying numbers of seeds, and that seeds are at least partially visible through the cluster coating. For example, although not so easily discernible in the greyscale photographs of Figures 5a and 5b, patches of light yellow/light brown from the seeds are clearly visible between patches of the green pigment outer coating on the seed clusters.

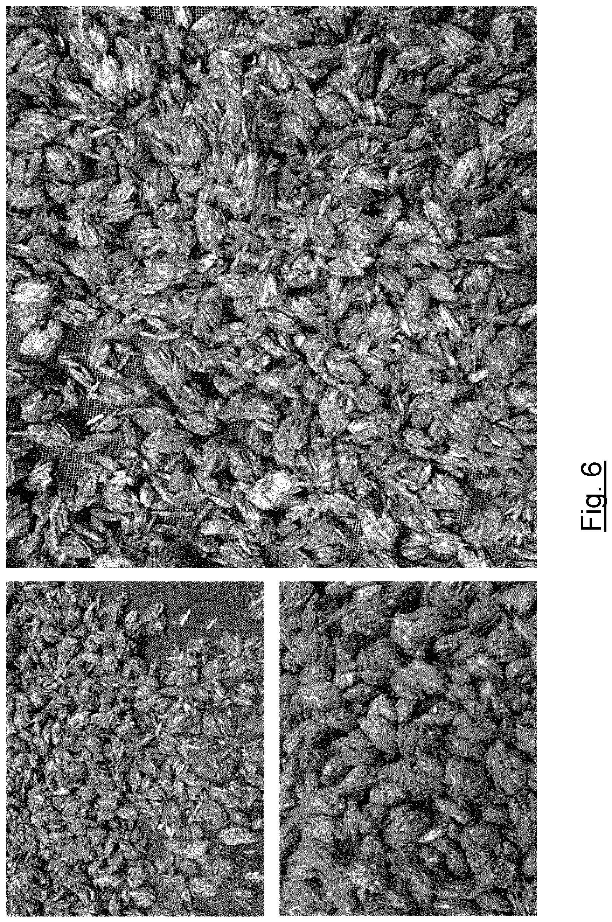

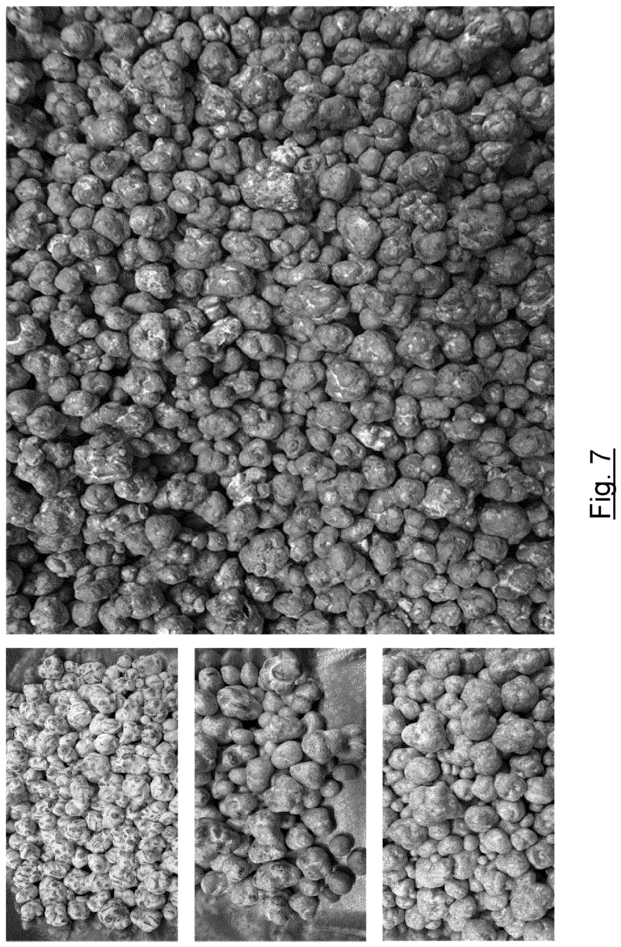

Figures 6 and 7 show photographs of further seed cluster batches prepared by analogous methods, utilising grass seed species.

Aspects of the invention are also described in the following numbered clauses: **1.** A process for forming a plurality of coated seed clusters, wherein the coated seed clusters each comprise multiple seeds bound together and at least partially coated by a coating composition, wherein the process comprises: agitating a seed batch in a mixing chamber of a seed rotary coating system to provide a rotating seed bed; spraying a liquid seed binder onto the rotating seed bed, wherein the liquid seed binder has a viscosity of at least 150 cP (as measured according to ASTM-D2196-20 at a temperature of 20°C and at 50 rpm); continuing agitation of the seed batch for an agglomeration time interval to form seed clusters in the rotating seed bed; adding after the agglomeration time interval a seed coating powder to the rotating seed bed, thereby halting seed cluster growth and providing a mixture of coated seed clusters. **2.** The process of clause 1, wherein: the agglomeration time interval is of a length sufficient for at least 90% of the seeds of the seed batch to be bound into seed clusters comprising at least two seeds, for example a length sufficient for at least 95% of the seeds of the seed batch to be bound into seed clusters comprising at least three seeds. **3.** The process of clause 1 or clause 2 wherein the agglomeration time interval is of a length sufficiently short for at least 90% of the seeds of the seed batch to be bound into seed clusters comprising no more than 20 seeds, for example a length sufficiently short for at least 95% of the seeds of the seed batch to be bound into seed clusters comprising no more than 15 seeds. **4.** The process of any preceding clause, wherein the seed coating powder comprises talc. **5.** The process of any preceding clause, wherein the liquid seed binder has a viscosity of 150 to 1600 cP, such as 250 to 1200 cP, for example 350 to 1000 cP (as measured according to ASTM-D2196-20 at a temperature of 20°C and 50 rpm). **6.** The process of any preceding clause, wherein the liquid seed binder is an aqueous solution of a binder material comprising at least about 25 wt% water, for example about 25 wt% to about 95 wt% water. **7.** The process of any preceding clause, wherein the liquid seed binder comprises a natural, non-synthetic binder material, such as a carbohydrate-based and/or sugar-derived seed binder. **8.** The process of any preceding clause, wherein one or more additional coating components are added to the seed bed together with or prior to addition of the seed coating powder, such as additional coating components selected from pigments and/or colorants, insecticides, fungicides and/or bio-stimulants. **9.** The process of any preceding clause, wherein seed binder and seed coating powder are added at a weight ratio of seed binder to coating powder of from about 0.2 to about 2, for example about 0.3 to about 1.5. **10.** The process of any preceding clause, seed binder is added at a weight ratio of seed binder to seed of from about 0.2 to about 4, such as about 0.3 to about 3, for example about 0.4 to about 1.5. **11.** The process of any preceding clause, where seed coating powder is added at a weight ratio of seed coating powder to seed of from about 0.2 to about 4, such as about 0.3 to about 3, for example about 0.4 to about 1.5. **12.** The process of any preceding clause, wherein the seed batch comprises at least 10% by quantity of seeds of each of at least two different seed species. **13.** The process of any preceding clause, wherein the seed batch comprises seeds of at least four different seed species, optionally wherein the seed batch comprises at least 10% by quantity of seeds of each of the at least four seed species. **14.** The process of any preceding clause, wherein the seed batch comprises a first species of seed having a first average maximum dimension and a second different species of seed having a second average maximum dimension, wherein the first average maximum dimension is at least two times, such as at least four times, for example at least eight times, the second average maximum dimension. **15.** The process of any preceding clause, wherein the seed batch comprises a first species of seed having a first thousand seed weight and a second different species of seed having a second thousand seed weight, wherein the first thousand seed weight is at least two times, such as at least five times, for example at least ten times, the second thousand seed weight. **16.** The process of any preceding clause, wherein the seed batch comprises a first species of seed having an average aspect ratio of no more than about 1.5, such as no more than about 1.3, for example no more than about 1.1, and a second different species of seed having an average aspect ratio of at least about 2, such as at least about 3, for example at least about 5, wherein the aspect ratio of a seed is the ratio between the largest dimension and the smallest dimension. **17.** The process according to any preceding clause, comprising loading separate seed species into the mixing chamber of the seed rotary coating system via separate seed feed inlets leading into the mixing chamber from outside the mixing chamber. **18.** The process of any preceding clause, wherein the seed batch is a first seed batch, the coated seed clusters are first coated seed clusters and the agglomeration time interval is a first agglomeration time interval, wherein the process comprises: adding a second seed batch to at least a portion of the first coated seed clusters to form a seed and cluster mixture, wherein the second seed batch includes seeds of a species different to the seed species of the first seed batch; agitating the seed and cluster mixture in a mixing chamber of a seed rotary coating system to provide a rotating seed and cluster bed; spraying a liquid seed binder onto the rotating seed and cluster bed, wherein the liquid seed binder has a viscosity of at least 150 cP (as measured according to ASTM-D2196-20 at a temperature of 20°C and 50 rpm); continuing agitation of the seed and cluster mixture to form second seed clusters in the rotating seed and cluster bed, wherein agitation continues for a second agglomeration time interval; adding after the second agglomeration time interval a seed coating powder to the rotating seed and cluster bed, thereby halting second seed cluster growth and providing a mixture of coated second seed clusters. **19.** The process of clause 18, wherein the second agglomeration time interval is of a length sufficient for at least 90% of the seeds of the second seed batch to be bound to the first seed clusters to form the second seed clusters, and/or wherein the second agglomeration time interval is of a length sufficiently short for at least 90% of the second seed clusters to comprise no more than 5 of the seeds of the second seed batch. **20**. The process of any preceding clause, wherein the coated seed clusters are partially coated such that at least a portion of at least one seed of the cluster is free from the coating. **21.** The process according to any preceding clause, comprising applying a further seed binder to the coated seed clusters by: agitating the coated first and/or second seed clusters in a mixing chamber of a seed rotary coating system to provide a rotating cluster bed; spraying a liquid seed binder onto the rotating cluster bed, wherein the liquid seed binder has a viscosity of no more than 100 cP (as measured according to ASTM-D2196-20 at a temperature of 20°C and 50 rpm); adding a seed coating powder to the rotating cluster seed bed to provide a mixture of film-coated seed clusters. **22.** The process of any one of clauses 1 to 21, wherein the seed clusters comprise seed clusters having a cluster size of from 2 to 4, and seed clusters having a cluster size of from 5 to 8; wherein cluster size is the number of seeds per cluster. **23.** The process of any one of clauses 1 to 22, wherein the seed clusters comprise seed clusters having a cluster size of 2 and seed clusters having a cluster size of at least 4, such as at least 6; wherein cluster size is the number of seeds per cluster. **24.** The process of any one of clauses 1 to 23, wherein the seed clusters have a cluster size standard deviation of at least 0.8, such as at least 1, for example at least 1.1; wherein cluster size is the number of seeds per cluster. **25.** The process of any one of clauses 1 to 24, wherein the first and second species include one or more of *Vicia faba* (Field bean), *Vicia sativa* (Common vetch), *Trifolium incarnatum* (Crimson clover), *Trifolium pratense* (Red clover), *Medicago sativa* (Alfalfa), *Lupinus spp.* (Lupins), *Pisum sativum* (Field pea), *Brassica napus* (Rapeseed), *Phacelia tanacetifolia* (Phacelia), *Sinapis alba* (White mustard), *Raphanus sativus* (Oilseed radish), *Secale cereale* (Rye), *Avena sativa* (Oats). **26.** The process of any one of clauses 1 to 25, wherein the first and second species include one or more of *Medicago sativa* (Alfalfa), *Trifolium pratense* (Red clover), *Trifolium repens* (White clover), *Vicia sativa* (Vetch), *Lathyrus sativus* (Grass pea), *Lolium perenne* (Perennial ryegrass), *Lolium multiflorum* (Italian ryegrass), *Dactylis glomerata* (Orchardgrass/Cocksfoot), *Festuca arundinacea* (Tall fescue), *Panicum virgatum* (Switchgrass), *Sorghum bicolor* (Forage sorghum), *Zea mays* (Forage maize), *Brassica napus* (Forage rape), *Brassica oleracea* (Kale), *Beta vulgaris* (Fodder beet), *Cichorium intybus* (Chicory). **27.** The process of any one of clauses 1 to 26, wherein the first and second species include one or more of *Lolium perenne* (Perennial ryegrass), *Festuca arundinacea* (Tall fescue), *Poa pratensis* (Kentucky bluegrass), *Dactylis glomerata* (Orchardgrass), *Festuca rubra* (Red fescue), *Cynodon dactylon* (Bermudagrass), *Panicum virgatum* (Switchgrass), *Sorghastrum nutans* (Indiangrass), *Trifolium repens* (White clover), *Medicago lupulina* (Black medic). **28.** A seed cluster batch comprising multi-seed clusters, wherein: at least 90% of the multi-seed clusters comprise seeds of at least two different species, optionally at least four different species; and the seed clusters comprise a talc seed coating powder and a natural, non-synthetic binder. **29.** A seed cluster batch according to clause 28, wherein at least 50% of the seed clusters comprise a first species of seed having a first average maximum dimension and a second species of seed having a second average maximum dimension, wherein the first average maximum dimension is at least two times, such as at least four times, for example at least eight times, the second average maximum dimension. **30.** A seed cluster batch according to clause 28 or clause 29, wherein at least 50% of the seed clusters comprise a first species of seed having a first thousand seed weight and a second species of seed having a second thousand seed weight, wherein the first thousand seed weight is at least two times, such as at least four times, for example at least eight times, the second thousand seed weight. **31.** A seed cluster batch according to any one of clauses 28 to 30, wherein at least 50% of the seed clusters comprise a first species of seed having an average aspect ratio of no more than about 1.5, such as no more than about 1.3, for example no more than about 1.1, and a second species of seed having an average aspect ratio of at least about 2, such as at least about 3, for example at least about 5, wherein the aspect ratio of a seed is the ratio between the largest dimension and the smallest dimension. **32.** The seed clusters of any one of clauses 28 to 31, wherein the seed clusters comprise seed clusters having a cluster size of from 2 to 4, and seed clusters having a cluster size of from 5 to 8; wherein cluster size is the number of seeds per cluster. **33.** The seed clusters of any one of clauses 28 to 32, wherein the seed clusters comprise seed clusters having a cluster size of 2 and seed clusters having a cluster size of at least 4, such as at least 6; wherein cluster size is the number of seeds per cluster. **34.** The seed clusters of any one of clauses 28 to 33, wherein the seed clusters have a cluster size standard deviation of at least 0.8, such as at least 1, for example at least 1.1; wherein cluster size is the number of seeds per cluster. **35.** The seed clusters of any one of clauses 28 to 34, wherein the first and second species include one or more of *Vicia faba* (Field bean), *Vicia sativa* (Common vetch), *Trifolium incarnatum* (Crimson clover), *Trifolium pratense* (Red clover), *Medicago sativa* (Alfalfa), *Lupinus spp.* (Lupins), *Pisum sativum* (Field pea), *Brassica napus* (Rapeseed), *Phacelia tanacetifolia* (Phacelia), *Sinapis alba* (White mustard), *Raphanus sativus* (Oilseed radish), *Secale cereale* (Rye), *Avena sativa* (Oats). 36. The seed clusters of any one of clauses 28 to 35, wherein the first and second species include one or more of *Medicago sativa* (Alfalfa), *Trifolium pratense* (Red clover), *Trifolium repens* (White clover), *Vicia sativa* (Vetch), *Lathyrus sativus* (Grass pea), *Lolium perenne* (Perennial ryegrass), *Lolium multiflorum* (Italian ryegrass), *Dactylis glomerata* (Orchardgrass/Cocksfoot), *Festuca arundinacea* (Tall fescue), *Panicum virgatum* (Switchgrass), *Sorghum bicolor* (Forage sorghum), *Zea mays* (Forage maize), *Brassica napus* (Forage rape), *Brassica oleracea* (Kale), *Beta vulgaris* (Fodder beet), *Cichorium intybus* (Chicory). **37.** The seed clusters of any one of clauses 28 to 36, wherein the first and second species include one or more of *Lolium perenne* (Perennial ryegrass), *Festuca arundinacea* (Tall fescue), *Poa pratensis* (Kentucky bluegrass), *Dactylis glomerata* (Orchardgrass), *Festuca rubra* (Red fescue), *Cynodon dactylon* (Bermudagrass), *Panicum virgatum* (Switchgrass), *Sorghastrum nutans* (Indiangrass), *Trifolium repens* (White clover), *Medicago lupulina* (Black medic). **38.** The seed clusters of any one of clauses 28 to 37, wherein the seed clusters are made by the process of any one of clauses 1 to 27. 39. A seed rotary coating system configured for use with the process of any one of clauses 1 to 27, and/or configured to produce a seed cluster batch according to any one of clauses 28 to 38, comprising a mixing chamber for mixing and coating seeds, wherein the apparatus further comprises at least two separate seed feed inlets leading into the mixing chamber from outside the mixing chamber, optionally wherein each of the at least two separate seed feed inlets is fluidly connected to a separate seed hopper.

Whilst the present invention has been described and illustrated with reference to particular embodiments, it will be appreciated by those of ordinary skill in the art that the invention lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A process for forming a plurality of coated seed clusters, wherein the coated seed clusters each comprise multiple seeds bound together and at least partially coated by a coating composition, wherein the process comprises:
agitating a seed batch in a mixing chamber of a seed rotary coating system to provide a rotating seed bed;
spraying a liquid seed binder onto the rotating seed bed, wherein the liquid seed binder has a viscosity of at least 150 cP (as measured according to ASTM-D2196-20 at a temperature of 20°C and at 50 rpm);
continuing agitation of the seed batch for an agglomeration time interval to form seed clusters in the rotating seed bed;
adding after the agglomeration time interval a seed coating powder to the rotating seed bed, thereby halting seed cluster growth and
providing a mixture of coated seed clusters.

2. The process of claim 1, wherein:
the agglomeration time interval is of a length sufficient for at least 90% of the seeds of the seed batch to be bound into seed clusters comprising at least two seeds, for example a length sufficient for at least 95% of the seeds of the seed batch to be bound into seed clusters comprising at least three seeds; and/or wherein:
the agglomeration time interval is of a length sufficiently short for at least 90% of the seeds of the seed batch to be bound into seed clusters comprising no more than 20 seeds, for example a length sufficiently short for at least 95% of the seeds of the seed batch to be bound into seed clusters comprising no more than 15 seeds.

3. The process of claim 1 or claim 2, wherein the seed coating powder comprises talc.

4. The process of any preceding claim, wherein the liquid seed binder has a viscosity of 150 to 1600 cP, such as 250 to 1200 cP, for example 350 to 1000 cP (as measured according to ASTM-D2196-20 at a temperature of 20°C and 50 rpm).

5. The process of any preceding claim, wherein the liquid seed binder is an aqueous solution of a binder material comprising at least about 25 wt% water, for example about 25 wt% to about 95 wt% water.

6. The process of any preceding claim, wherein the liquid seed binder comprises a natural, non-synthetic binder material, such as a carbohydrate-based and/or sugar-derived seed binder.

7. The process of any preceding claim, wherein:
seed binder and seed coating powder are added at a weight ratio of seed binder to coating powder of from about 0.2 to about 2, for example about 0.3 to about 1.5;
seed binder is added at a weight ratio of seed binder to seed of from about 0.2 to about 4, such as about 0.3 to about 3, for example about 0.4 to about 1.5; and/or
seed coating powder is added at a weight ratio of seed coating powder to seed of from about 0.2 to about 4, such as about 0.3 to about 3, for example about 0.4 to about 1.5.

8. The process of any preceding claim, wherein:
the seed batch comprises at least 10% by quantity of seeds of each of at least two different seed species;
the seed batch comprises seeds of at least four different seed species, optionally wherein the seed batch comprises at least 10% by quantity of seeds of each of the at least four seed species;
the seed batch comprises a first species of seed having a first average maximum dimension and a second different species of seed having a second average maximum dimension, wherein the first average maximum dimension is at least two times, such as at least four times, for example at least eight times, the second average maximum dimension;
the seed batch comprises a first species of seed having a first thousand seed weight and a second different species of seed having a second thousand seed weight, wherein the first thousand seed weight is at least two times, such as at least five times, for example at least ten times, the second thousand seed weight; and/or
the seed batch comprises a first species of seed having an average aspect ratio of no more than about 1.5, such as no more than about 1.3, for example no more than about 1.1, and a second different species of seed having an average aspect ratio of at least about 2, such as at least about 3, for example at least about 5, wherein the aspect ratio of a seed is the ratio between the largest dimension and the smallest dimension.

9. The process of any preceding claim, wherein the seed batch is a first seed batch, the coated seed clusters are first coated seed clusters and the agglomeration time interval is a first agglomeration time interval, wherein the process comprises:
adding a second seed batch to at least a portion of the first coated seed clusters to form a seed and cluster mixture, wherein the second seed batch includes seeds of a species different to the seed species of the first seed batch;
agitating the seed and cluster mixture in a mixing chamber of a seed rotary coating system to provide a rotating seed and cluster bed;
spraying a liquid seed binder onto the rotating seed and cluster bed,
wherein the liquid seed binder has a viscosity of at least 150 cP (as measured according to ASTM-D2196-20 at a temperature of 20°C and 50 rpm);
continuing agitation of the seed and cluster mixture to form second seed clusters in the rotating seed and cluster bed, wherein agitation continues for a second agglomeration time interval;
adding after the second agglomeration time interval a seed coating powder to the rotating seed and cluster bed, thereby halting second seed cluster growth and providing a mixture of coated second seed clusters;
optionally wherein the second agglomeration time interval is of a length sufficient for at least 90% of the seeds of the second seed batch to be bound to the first seed clusters to form the second seed clusters, and/or wherein the second agglomeration time interval is of a length sufficiently short for at least 90% of the second seed clusters to comprise no more than 5 of the seeds of the second seed batch.

10. The process of any preceding claim, wherein the coated seed clusters are partially coated such that at least a portion of at least one seed of the cluster is free from the coating.

11. The process according to any preceding claim, comprising applying a further seed binder to the coated seed clusters by:
agitating the coated first and/or second seed clusters in a mixing chamber of a seed rotary coating system to provide a rotating cluster bed;
spraying a liquid seed binder onto the rotating cluster bed, wherein the liquid seed binder has a viscosity of no more than 100 cP (as measured according to ASTM-D2196-20 at a temperature of 20°C and 50 rpm);
adding a seed coating powder to the rotating cluster seed bed to provide a mixture of film-coated seed clusters.

12. A seed cluster batch comprising multi-seed clusters, wherein:
at least 90% of the multi-seed clusters comprise seeds of at least two different species, optionally at least four different species; and
the seed clusters comprise a talc seed coating powder and a natural, non-synthetic binder;
optionally wherein at least 50% of the seed clusters comprise:
a first species of seed having a first average maximum dimension and a second species of seed having a second average maximum dimension, wherein the first average maximum dimension is at least two times, such as at least four times, for example at least eight times, the second average maximum dimension;
a first species of seed having a first thousand seed weight and a second species of seed having a second thousand seed weight, wherein the first thousand seed weight is at least two times, such as at least four times, for example at least eight times, the second thousand seed weight; and/or
a first species of seed having an average aspect ratio of no more than about 1.5, such as no more than about 1.3, for example no more than about 1.1, and a second species of seed having an average aspect ratio of at least about 2, such as at least about 3, for example at least about 5, wherein the aspect ratio of a seed is the ratio between the largest dimension and the smallest dimension

13. The process of any one of claims 1 to 11, or the seed clusters of claim 12, wherein:
the seed clusters comprise seed clusters having a cluster size of from 2 to 4, and seed clusters having a cluster size of from 5 to 8;
the seed clusters comprise seed clusters having a cluster size of 2 and seed clusters having a cluster size of at least 4, such as at least 6; and/or
the seed clusters have a cluster size standard deviation of at least 0.8, such as at least 1, for example at least 1.1;
wherein cluster size is the number of seeds per cluster.

14. The process of any one of claims 1 to 11 or 13, or the seed clusters of claim 12 or claim 13, wherein:
the first and second species include one or more of *Vicia faba* (Field bean), *Vicia sativa* (Common vetch), *Trifolium incarnatum* (Crimson clover), *Trifolium pratense* (Red clover), *Medicago sativa* (Alfalfa), *Lupinus spp.* (Lupins), *Pisum sativum* (Field pea), *Brassica napus* (Rapeseed), *Phacelia tanacetifolia* (Phacelia), *Sinapis alba* (White mustard), *Raphanus sativus* (Oilseed radish), *Secale cereale* (Rye), *Avena sativa* (Oats);
the first and second species include one or more of *Medicago sativa* (Alfalfa), *Trifolium pratense* (Red clover), *Trifolium repens* (White clover), *Vicia sativa* (Vetch), *Lathyrus sativus* (Grass pea), *Lolium perenne* (Perennial ryegrass), *Lolium multiflorum* (Italian ryegrass), *Dactylis glomerata* (Orchardgrass/Cocksfoot), *Festuca arundinacea* (Tall fescue), *Panicum virgatum* (Switchgrass), *Sorghum bicolor* (Forage sorghum), *Zea mays* (Forage maize), *Brassica napus* (Forage rape), *Brassica oleracea* (Kale), *Beta vulgaris* (Fodder beet), *Cichorium intybus* (Chicory); and/or
the first and second species include one or more of *Lolium perenne* (Perennial ryegrass), *Festuca arundinacea* (Tall fescue), *Poa pratensis* (Kentucky bluegrass), *Dactylis glomerata* (Orchardgrass), *Festuca rubra* (Red fescue), *Cynodon dactylon* (Bermudagrass), *Panicum virgatum* (Switchgrass), *Sorghastrum nutans* (Indiangrass), *Trifolium repens* (White clover), *Medicago lupulina* (Black medic).

15. A seed rotary coating system configured for use with the process of any one of claims 1 to 11 or 13, and/or configured to produce a seed cluster batch according to any one of claims 12 to 14, comprising a mixing chamber for mixing and coating seeds, wherein the apparatus further comprises at least two separate seed feed inlets leading into the mixing chamber from outside the mixing chamber, optionally wherein each of the at least two separate seed feed inlets is fluidly connected to a separate seed hopper.
